# EUROPEAN PATENT SPECIFICATION

(11) **EP 0 925 625 B1**
(45) Date of publication and mention of the grant of the patent: **20.03.2002**
(21) Application number: 97939024.2
(22) Date of filing: 04.09.1997
(51) Int. Cl.: H02G 5/00, H02G 5/06

(54) **BUS BAR SUPPORT**
SAMMELSCHIENENTRÄGER
SUPPORT DE BARRE BUS

(30) Priority: 10.09.1996 GB 9618868; 09.01.1997 GB 9700350
(43) Date of publication of application: 30.06.1999
(73) Proprietor: Rolla Limited, Brighthouse, West Yorkshire HD5 1ET (GB)
(72) Inventor: ROE, George, Roger, Huddersfield HD4 6TR (GB)
(74) Representative: Chugg, David John
(86) International application number: GB9702369
(87) International publication number: WO9811639

(56) References cited:
- GB-A- 2 112 587
- US-A- 2 341 841
- US-A- 2 868 864
- US-A- 2 948 771

## Description

The invention relates to bus bars. In particular, the invention relates to supports for bus bars.

There are various types of bus bar support design on the market today. Many bus bar supports incorporate, as well as supporting members, various insulating members, spacers etc., and this often leads to an unwieldy form of design.

A typical example of a known bus bar design is given in UK patent 2112587, which discloses a bus bar support system in which a plurality of bus bars are supported by running through apertures in insulating supports and are isolated from the external environment by insulating mouldings. In this document a large number of irregularly shaped insulating members are required to provide support for the bus bars and to isolate them from the external environment.

It is an aim of embodiments of the present invention to provide a simplified bus bar support design.

In accordance with a first aspect of the invention, there is provided a bus bar support comprising at least first and second complementarily shaped insulating members, each of said insulating members having at least one aperture defined therein, the first insulating member and the second insulating member cooperating with one another so that the or each aperture of said first insulating member is arranged to oppose the or each aperture of said second insulating member, the apertures being spaced apart by a predetermined amount and adapted to carry a bus bar.

Preferably, a plurality of such opposing apertures are provided.

Preferably, the insulating members comprise sheets of transparent material. The insulating members may be of polycarbonate material.

The insulating members may be generally U-shaped, in cross-section.

The insulating members may comprise sheets of material which are then formed to take on a general U-shaped cross-section. Forming of said sheets may comprise folding. The folding may be done when the material is hot or cold. The apertures may be made before said forming step.

In an alternative, the insulating member may be manufactured by an extrusion method and the apertures may be made subsequently.

At least part of said first insulating member may be arranged to overlap at least part of said second insulating member so as to facilitate securing together of the insulating members and to bring about the opposed arrangement of said apertures.

One or more of said insulating members may be provided with locating means for locating the insulating members in spaced relation.

One of said insulating members may be provided with a tongue and the other may be provided with a complementary shaped groove for providing said location.

The locating means may comprise fixing means such as a nylon screw for securing the first and second insulating members together.

Preferably, at least one of said insulating members may be provided with one or more extensions, said extensions being arranged to maintain respective apertures of the first and second insulating members in opposing spaced apart relation.

Preferably, said extensions form part of said insulating members, so that the insulating members are of a channel-type construction.

The first and second insulating members may be adapted to interlock with one another. This interlock may be provided by the locating means.

Joining together of the two insulating members may form a box-like cross-sectional construction may be brought about by the opposing insulating members and their overlapping extensions.

One or more spacing members may be provided to provide reinforcement to the support and/or to provide means for attachment of the bus bar support to a supporting surface.

The or each spacing member may comprise a tube of material which, in use, is aligned with holes in the insulating members.

For a better understanding of the invention, and to show how embodiments of the same may be carried into effect, reference will now be made, by way of example, to the accompanying diagrammatic drawings, in which:
Figure 1 shows a front perspective view of a bus bar support;
Figure 2 is a view from arrow A of Figure 1;
Figure 3 is a view from arrow B of Figure 1;
Figure 4 is a view from arrow C of Figure 1;
Figure 5 is a front view of an insulating member of a bus bar support in accordance with an embodiment of the invention, showing the insulating member in a state prior to being folded;
Figure 6 is a side view of the insulating member of Figure 5 in a folded configuration;
Figure 7A is a pre-folding front view and Figure 7B is a folded side view of a second insulating member for use with the second embodiment;
Figures 8, 9 and 10 are respectively side views, front views and top plan views of an assembled bus bar support in accordance with the second embodiment; and
Figure 11 is a side view of an alternative embodiment of bus bar support showing how a tongue and groove arrangement may be provided for locating insulating members of the support.

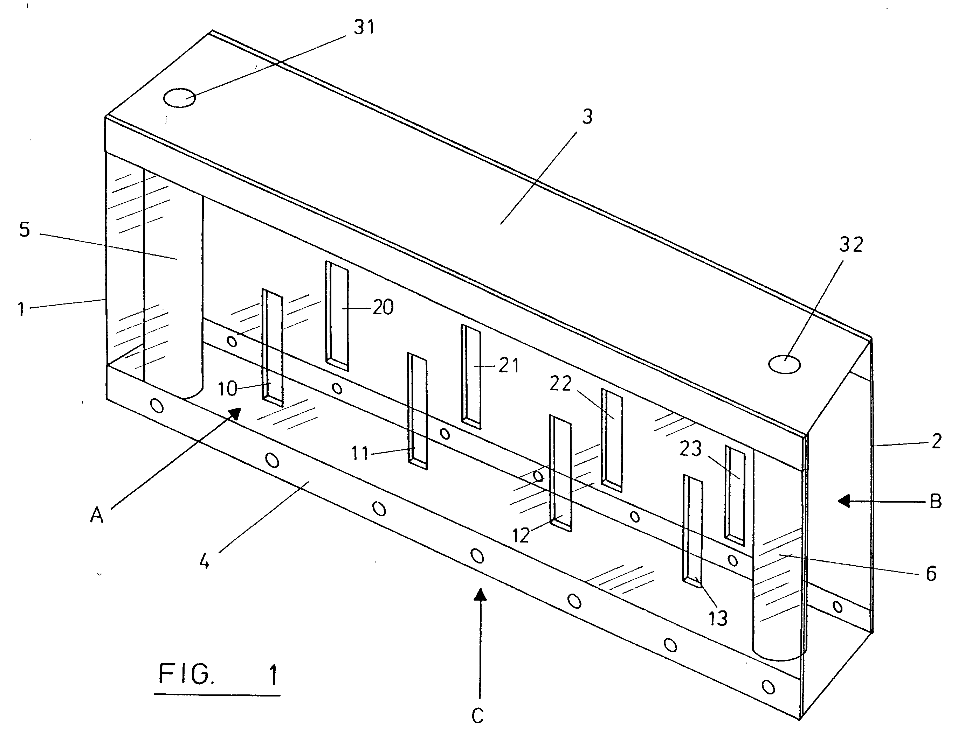

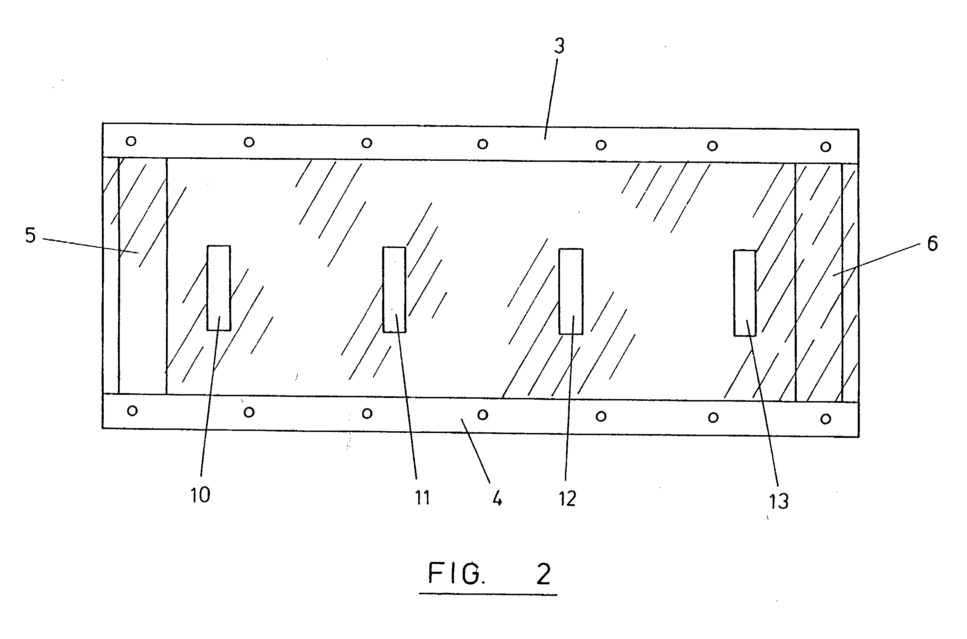

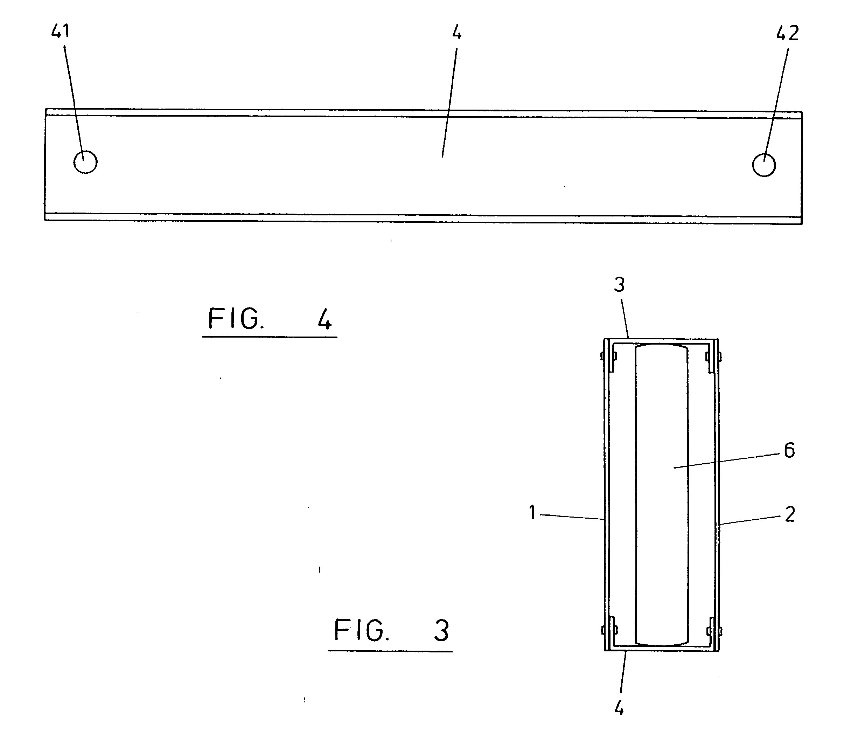

Referring to Figures 1, 2, 3 and 4, there is shown a bus bar support comprising first and second spaced apart insulating members which comprise sheets of polycarbonate material 1, 2.

The insulating members 1, 2 may be spaced apart by means of channel members 3, 4 to which they may be fixed, for instance, by riveting.

Further, extra rigidity may be provided to the bus bar support by providing cylindrical spacer members 5, 6.

The insulating members 1, 2 each define a number of apertures 10 to 13 and 20 to 23. Aperture 10 is arranged to be in opposition to aperture 20 etc. and to allow the insertion of a bus bar therethrough. In this manner, the insulating members 1, 2 not only provide the function of insulating bus bars from one another (up to four bus bars being arranged to be mounted in the support shown) but also to provide the bus bar supporting function itself. Furthermore, the sheets of polycarbonate material making up the insulating members 1, 2 are transparent, and allow for easy inspection of the arrangement.

Referring now to the channel members 3, 4, these are provided with mounting holes 31, 32, 41, 42 which communicate with the hollow cylindrical members 5, 6. By passing a suitable mounting means through, for instance, hols 31, tube 5 and hole 41, the bus bar support may be mounted or suspended wherever required.

It will be appreciated that, in some instances, the hollow cylinders 5, 6 need not be provided and mounting of the arrangement may be carried out by simply fixing one or both of the channel members to a mounting surface.

Whilst the support shown is for up to four bus bars, it will be appreciated that supports may be provided for any number of bus bars.

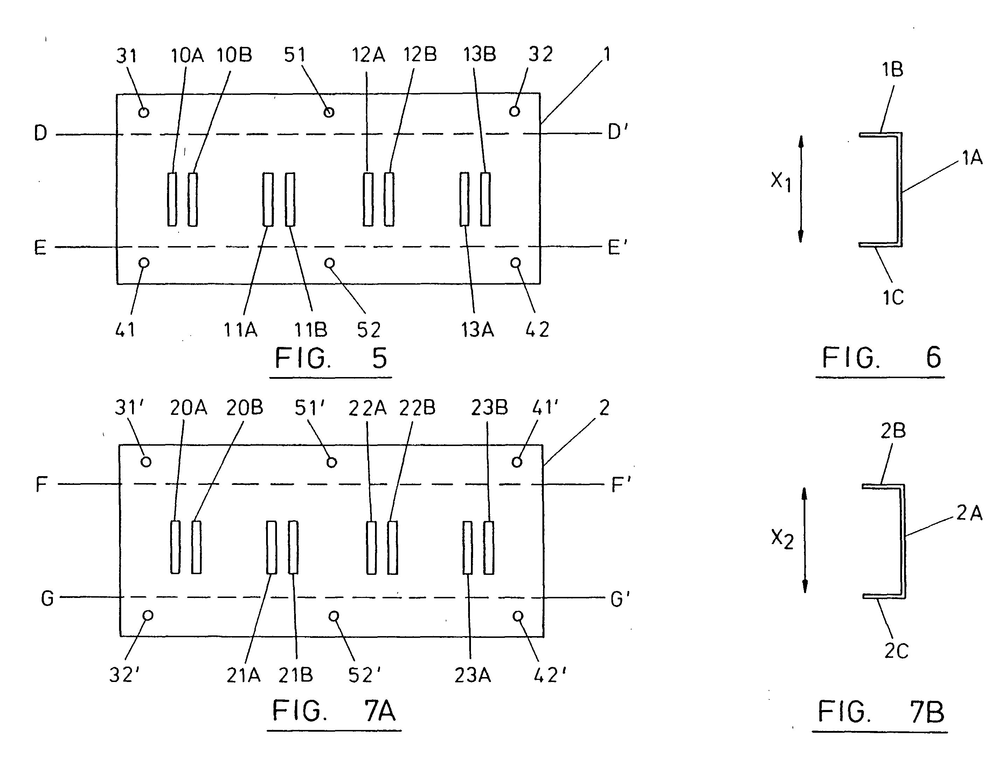

An embodiment of a bus bar support according to the present invention will now be described with reference to Figures 5 to 10. Where like elements are shown in relation to this embodiment, like reference numerals will be utilised.

Referring to Figures 5 and 6, a first insulating member 1 is shown. The insulating member 1, is shown in Figure 5 in a flat sheet form. This sheet of preferably polycarbonate material is then brought into a generally U-shaped channel type formation (comprising a front face 1A, and top and bottom extensions forming ledge regions 1B, 1C) by folding the sheet along lines D-D' and E-E'.

The insulating member 1 includes openings or apertures to allow the insertion of bus bars therethrough. In the example shown in Figures 5 and 6, four pairs of apertures are provided, 10A, 10B - 13A, 13B. Further holes: 31, 32; 41, 42; and 51, 52 are provided to give, respectively, top locating holes for cylinders 5, 6; bottom locating holes for cylinders 5, 6, and means for fixing the first insulating member respectively.

Figures 7A and 7B shows the second insulating member and this is of identical general structure to the first insulating member (except for the folding positions - as will be described hereinafter) shown in Figures 5 and 6 and, for instance, comprises a front face 2A and longitudinally extending bottom and top ledges 2B, 2C.

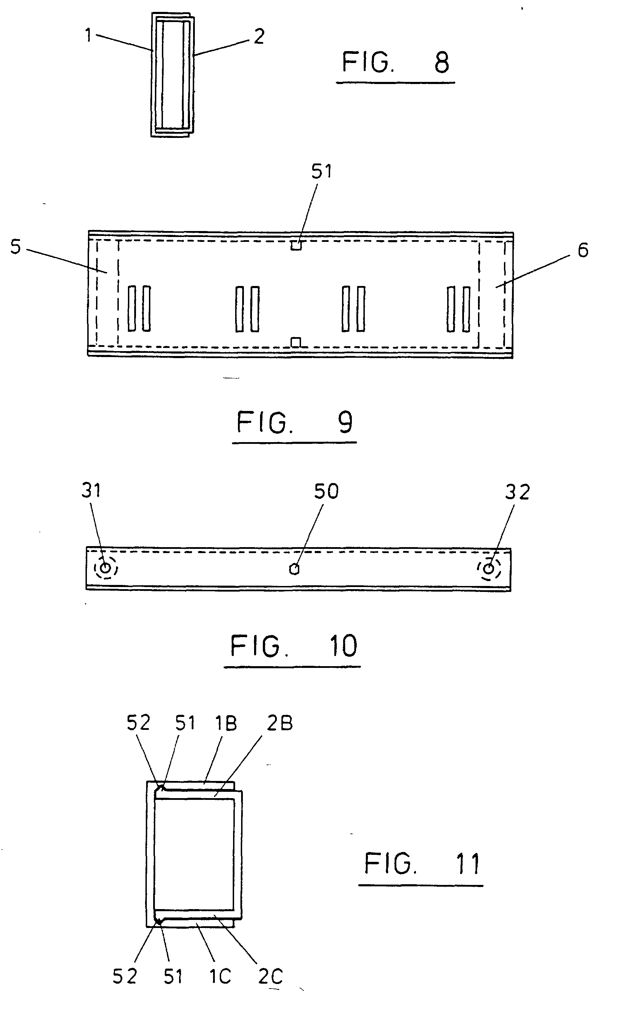

Comparing the side views of the insulating member 1 of Figure 6 and that of the insulating member 2 of Figure 7, it should be noted that the spacing between the ledges 1B and 1C (X₁) and the spacing between upper and lower ledges 2B, 2C of the second insulating member 2(X₂) (which spacings are determined by the fold lines D-D' - G-G') are not identical and it is arranged that X₁ is greater than X₂ (or of course vice versa in alternative arrangements). The reason for this becomes clear when the assembled embodiment of Figures 8 to 10 is considered.

Regarding initially Figure 8, which is a side view of the assembled bus bar support of this embodiment, it can be seen that the insulating members 1, 2 are arranged such that the two members may be brought together and upper ledges 1B, 1C arrange to overlap upper and lower ledges 2B, 2C of the insulating member 2.

By arranging the two insulating members in this fashion, and somehow securing the two members together, a bus bar support with a relatively rigid structure is obtained, without the need for separate channel members.

Figures 8 and 9 show cylindrical members 5, t of similar type to that utilised with the bus bar support of Figures 1 to 4. As with the bus bar support, those hollow cylindrical members 5, 6 may be utilised to add extra rigidity to the bus bar support and/or provide possibilities for mounting or suspending the bus bar support where required. The members 5,6 communicate with upper, 31, 32, and lower, 31', 32', holes formed in top and bottom faces of the bus bar support.

An additional/alternative means for securing the first and second members 1, 2 of the bus bar support together is to utilise a fixing means such as a nylon bolt, descending through an upper aperture 51 of the upper ledge 1B of insulating member 1 and mating with a nut insert 51' formed with or attached to the upper ledge 2B of insulating member 2. Similar attachment means 52, 52' may be provided for the bottom ledges 1C, 2C of the insulating members.

It will be appreciated that numerous modifications may be made to the apparatus without departing from the scope of the present invention as defined by the appended claims. For instance, the insulating hollow tubes 5, 6 may be dispensed with. The nut and bolt fixing 50, 51 could be replaced by some alternative form of fixing. For instance, there could be some interlocking tongue and groove fixture provided between the insulating members 1 and 2 so that they positively lock with one another. For instance, referring to Figure 11 a longitudinally running tongue could be formed in extreme ends of upper and lower ledges 2B, 2C of insulating member 2 for cooperation with a longitudinally running internal groove 52 formed along or adjacent to the inner corners of insulating member 1 where upper and lower ledges 1B, 1C meet with the front portion 1A of the insulating member 1. Such a tongue and groove arrangement would allow the insulating member 2 to be mated with insulating member 1 by longitudinal sliding engagement.

It will be appreciated that many different configurations of support may be envisaged and still be within the general scope of this invention as defined by the appended claims. For instance, in possible variations the tongue and groove principle of linking the insulating members may be employed by providing tongues at some other point on the ledges 2B, 2C to interact with correspondingly positioned grooves on ledges 1B, 1C. In another configuration, insulating members 1, 2 could be modified so that one ledge e.g. 1B could be arranged to overlie corresponding ledge 2B to be on the outside of the box-like constructions whilst lower ledge 1C could overlie corresponding ledge 2C to be on the inside of the box-like construction.

The materials of the insulating members and (where provided) the hollow tubes 5, 6 may be of any suitable types such as polycarbonate material. The apparatus of the embodiment shown in Figures 5 to 11 is particularly advantageous in that the insulating members may be either extruded or cold or hot formed providing ease of manufacture, low number of components and low cost.

## Claims

1. A bus bar support comprising at least first and second complementarily shaped insulating members (1, 2), each of said insulating members having at least one aperture (10A-13B, 20A-23B) defined therein, the first insulating member (1) and the second insulating member (2) cooperating with one another so that the or each aperture (10A-13B) of said first insulating member (1) is arranged to oppose the or each aperture (20A-23B) of said second insulating member (2), the apertures being spaced apart by a predetermined amount and adapted to carry a bus bar.

2. A support according to claim 1, wherein the insulating members comprise polycarbonate material.

3. A support according to claim 2, wherein the insulating members (1, 2) are generally U-shaped in cross-section.

4. A support according to any of claims 2 and 3, wherein at least part (1B, 1C) said first insulating member (1) is arranged to overlap at least part (2B, 2C) of said second insulating member (2) so as to facilitate securing together of the insulating members and to bring about the opposed arrangement of said apertures (10A-13B, 20A-23B).

5. A support according to any of claims 2 to 4, wherein either or both of said insulating members (1, 2) are provided with locating means (51, 52) for locating the insulating members in spaced relation.

6. A support according to any of claims 2 to 5, wherein at least one of said insulating members (1, 2) is provided with one or more extensions (1B, 1C, 2B, 2C), said extensions (1B, 1C, 2B, 2C) being arranged to maintain respective apertures (10A-13B, 20A-23B) of the first and second insulating members (1, 2) in opposing spaced apart relation.

7. A support according to claim 6, wherein said extensions (1B, 1C, 2B, 2C) form part of said insulating members (1, 2) so that the insulating members (1, 2) are of a channel type construction.

8. A support according to any of claims 1 to 7, wherein the first and second insulating members (1, 2) are adapted to interlock with one another.

9. A support according to any of claims 1 to 8, wherein joining together of the two insulating members (1, 2) forms a box-like cross-sectional construction.

## Patentansprüche

1. Sammelschienenträger, der wenigstens ein erstes und ein zweites isolierendes Element (1, 2), die komplementär geformt sind, umfasst, wobei in jedem der isolierenden Elemente wenigstens eine Öffnung (10A-13B, 20A-23B) ausgebildet ist, das erste isolierende Element (1) und das zweite isolierende Element (2) so zusammenwirken, dass die oder jede Öffnung (10A-13B) des ersten isolierenden Elementes (1) der oder jeder Öffnung (20A-23B) des zweiten isolierenden Elementes (2) gegenüberliegt, wobei die Öffnungen um einen vorgegebenen Betrag voneinander beabstandet sind und eine Sammelschiene tragen.

2. Träger nach Anspruch 1, wobei die isolierenden Elemente Polycarbonat-Material umfassen.

3. Träger nach Anspruch 2, wobei die isolierenden Elemente (1, 2) im Querschnitt im Allgemeinen U-förmig sind.

4. Träger nach einem der Ansprüche 2 und 3, wobei wenigstens ein Teil (1B, 1C) des ersten isolierenden Elementes (1) wenigstens einen Teil (2B, 2C) des zweiten isolierenden Elementes (2) überdeckt, um das Befestigen der isolierenden Elemente aneinander zu erleichtern und die einander gegenüberliegende Anordnung der Öffnungen (10A-13B, 20A-23B) herzustellen.

5. Träger nach einem der Ansprüche 2 bis 4, wobei eines oder beide der isolierenden Elemente (1, 2) mit Arretiereinrichtungen (51, 52) versehen sind, mit denen die isolierenden Elemente in beabstandeter Beziehung arretiert werden.

6. Träger nach einem der Ansprüche 2 bei 5, wobei wenigstens eines der isolierenden Elemente mit einer oder mehreren Verlängerungen (1B, 1C, 2B, 2C) versehen ist und die Verlängerungen (1B, 1C, 2B, 2C) entsprechende Öffnungen (10A-13B, 20A-23B) des ersten und des zweiten isolierenden Elementes (1, 2) in einander gegenüberliegender, beabstandeter Beziehung halten.

7. Träger nach Anspruch 6, wobei die Verlängerungen (1B, 1C, 2B, 2C) einen Teil der isolierenden Elemente (1, 2) bilden, so dass die isolierenden Elemente (1, 2) eine rinnenartige Konstruktion haben.

8. Träger nach einem der Ansprüche 1 bei 7, wobei das erste und das zweite isolierende Element (1, 2) miteinander in Eingriff kommen.

9. Träger nach einem der Ansprüche 1 bei 8, wobei bei der Verbindung der zwei isolierenden Elemente (1, 2) eine kastenartige Querschnittskonstruktion entsteht.

## Revendications

1. Support de barre bus comprenant au moins un premier et un deuxième éléments isolants de formes complémentaires (1, 2), étant faite au moins une ouverture (10A-13B, 20A-23B), dans chacun de ces éléments isolants, le premier élément isolant (1) et le deuxième élément isolant (2) coopérant de façon que la ou chaque ouverture (10A-13B) du premier élément isolant (1) soit placée en face de la ou chaque ouverture (20A-23B) du deuxième élément isolant (2), les ouvertures étant espacées d'une distance déterminée et faites pour porter une barre omnibus.

2. Support selon la revendication 1, dans lequel les éléments isolants sont en polycarbonate.

3. Support selon la revendication 2, dans lequel les éléments isolants (1, 2) ont une section de manière générale en forme de U.

4. Support selon l'une des revendications 2 et 3, dans lequel au moins une partie (1B, 1C) du premier élément isolant (1) est placée pour recouvrir au moins une partie (2B, 2C) du deuxième élément isolant (2) afin de faciliter la fixation ensemble des éléments isolants et de réaliser la disposition opposée des ouvertures (10A-13B, 20A-23B).

5. Support selon l'une des revendications 2 à 4, dans lequel un des éléments isolants (1, 2) ou les deux sont pourvus de moyens de positionnement (51, 52) pour le positionnement espacé des éléments isolants.

6. Support selon l'une des revendications 2 à 5, dans lequel au moins un des éléments isolants (1, 2) est pourvu d'une ou de plusieurs rallonges (1B, 1C, 2B, 2C), ces rallonges (1B, 1C, 2B, 2C) étant disposées pour maintenir les ouvertures respectives (10A-13B, 20A, 23B) des premier et deuxième éléments isolants (1, 2) espacées et opposées.

7. Support selon la revendication 6, dans lequel les rallonges (1B, 1C, 2B, 2C) font partie des éléments isolants (1, 2) de façon que ces derniers soient d'une construction du type canal.

8. Support selon l'une des revendications 1 à 7, dans lequel les premier et deuxième éléments isolants (1, 2) sont faits de façon à se verrouiller l'un à l'autre.

9. Support selon l'une des revendications 1 à 8, dans lequel la jonction des deux éléments isolants (1, 2) forme une construction à section du genre boîte.
